# EUROPEAN PATENT SPECIFICATION

(11) **EP 0 297 437 B1**
(45) Date of publication and mention of the grant of the patent: **01.09.1993**
(21) Application number: 88110043.2
(22) Date of filing: 23.06.1988
(51) Int. Cl.: G02B 5/18, G02B 6/34, H04J 15/00

(54) **Flexible replica grating and optical multiplexer/demultiplexer using it**
Flexibles Replika-Gitter und optischer Multiplexer/Demultiplexer mit Anwendung eines solchen Gitters
Réplique flexible de réseau et multiplexeur/démultiplexeur optique utilisant ledit réseau

(30) Priority: 27.06.1987 JP 160220/87; 31.07.1987 JP 193243/87
(43) Date of publication of application: 04.01.1989
(73) Proprietor: SHIMADZU CORPORATION, Kyotoshi Kyoto-fu 604 (JP)
(72) Inventor: Kuzuta, Nobuyuki, Atsugi-City Kanagawa 243 (JP); Hasegawa, Eiichi, Atsugi-City Kanagawa 243 (JP); Kimura, Teiyu, Atsugi-City Kanagawa 243-02 (JP)
(74) Representative: TER MEER STEINMEISTER & PARTNER GbR

(56) References cited:
- EP-A- 0 175 460
- GB-A- 2 163 919
- US-A- 3 337 945
- US-A- 4 274 706
- US-A- 4 287 235
- IBM TECHNICAL DISCLOSURE BULLETIN, vol. 23, no. 10, March 1981, pages 4761-4762, New York, US; M.J. BRADY et al.: "Deformable rubber gratings"
- JOURNAL OF THE OPTICAL SOCIETY OF AMERICA, vol. 44, no. 9, September 1954, pages 669-671; G. HASS et al.: "Method for producing replica mirrors with high quality surfaces"

## Description

### BACKGROUND OF THE INVENTION

The present invention relates to a manufacture method for manufacturing a flexible replica grating.

In US-A-4 274 706 there is disclosed a coupler for wavelength multiplexing or demultiplexing of multimode optical signals in optical circuits. Light introduced through an input/output surface at one end of a planar optical waveguide formed within a glass substrate propagates to a convexly curved second end of the waveguide on which is contiguously mounted a flexible, reflective diffraction grating. The light is diffracted by the diffraction grating and focussed by the curved end back onto the first end of the waveguide. The reflective diffraction grating is made of thin flexible material, having its grating lines perpendicular to the upper and lower surface of the waveguide. The grating has a series of parallel grooves and undulations of uniform spacing. Normally grating is cut from a sheet of replica grating comprising an acetate plastic film having 512 grooves per millimeter. A thin aluminium coating on the plastic film gives the grating a high reflectance.

In EP-A-0 175 460 there is disclosed a method of manufacturing a diffraction grating, whereby the grating bearing surface of a master grating is coated with a release agent, and a rigid substrate has a layer of ultravioletsensitive liquid resin applied thereto before bringing the master grating an the substrate together to trap a film of the liquid resin therebetween, whereafter the liquid resin is cured by exposure to ultraviolet light through the master grating and the master grating and resin-profiled substrate are separated prior to completion of the diffraction grating by deposition of a thin metal film on the resin-profiled surface of the substrate. This method is rather expensive because an extra ultraviolet light source is needed for preparing the surface of the grating.

The US-A-4,287,235 shows a technique for fabricating high contrast X-ray masks with precisely controlled linewidths. The technique is based on the deposition of an oblique angle of X-ray absorber material onto relief structures of triangular or square cross-section in a polyimide plastic membrane. The triangular cross-section structures required are produced in silicon by anisotropic chemical etching and then transferred to polyimide by molding. Additional security means are required for this fabrication method because of the dangerous X-ray.

In JOURNAL OF THE OPTICAL SOCIETY OF AMERICA , Vol. 44, No. 9, September 1954, pages 669-671; G. Hass et al: "Method for Producing Replica Mirrors with High Quality Surfaces" there is described a method for producing replica mirrors with high quality surface. By this method the final mirror coatings are everaporated on the master mold and separated with the repicla body to which they adhere. Thus no finishing coatings are required after the replicas are separated from the master mode. The replicas equiped with the final high reflecting coatings are prepaired directly on the master mode. The substrate is of epoxy, whereby a layer of aluminium is adhered to said substrate.

A method of forming diffraction grating masters ruled in transfer films is disclosed in US-A-3,337,945. Said method comprises the steps of providing a glass plate having a master polished optical surface formed thereon, forming on said surface an extremely thin film of release substance, depositing on said film a thick metallic layer, covering said layer with a thin coating of cement, adhering a glass backing plate onto said layer by means of said cement and allowing the cement to solidify, separating said master glass plate from said metallic layer to expose the optically flat surface formed thereon by the master optical surface of said glass plate, and burnishing a periodic groove structure of a diffraction grating into the metallic layer that has been formed against said master surface. The material for the metal layer is high purity aluminium although other metals such as gold are possible. All known methods for manufacturing a flexible replica grating cannot afford sufficient flexibility. In case of a thinner layer substrate for more flexibility some troubles in manufaturing process occur and this methods are not productive.

### SUMMARY OF THE INVENTION

It is an object of the present invention to provide manufacturing steps for manufacturing a flexible replica grating having sufficient flexibility.

Other objects of applicability of the present invention will become apparent from the detailed description given hereinafter.

The following method is accomplished to manufacture the flexible replica grating: preparing a mold release agent layer on the surface of a master diffraction grating; preparing a metal layer on the mold release agent layer; preparing a synthetic resin layer on the metal layer; preparing a flexible synthetic resin film on the synthetic resin layer; hardening the synthetic resin layer; and removing the combination of the metal layer, the synthetic resin layer, and the flexible synthetic resin film from the master diffraction grating.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
FIGs 1 through 3 show manufacturing steps of a flexible replica grating according to the present invention;
FIG 4 shows a graph representing the comparison of groove shapes between the surface of a master diffraction grating and that of a replica grating of FIG 3;
FIG 5 shows an optical multiplexer/demultiplexer according to a; first example of application;
FIG 6 shows an optical demultiplexer according to a second example of application;
FIG 7 shows an optical spectrum analyzer and a halogen lamp light source;
FIG 8 shows a graph representative of insertion loss property of the demultiplexer without the flexible replica grating; and
FIG 9 shows a graph of the branching characteristics of the demultiplexer.

### DESCRIPTION OF THE PREFERRED EMBODIMENTS

Attention is directed to a preferred embodiment of the present invention regarding a flexible replica grating per se.

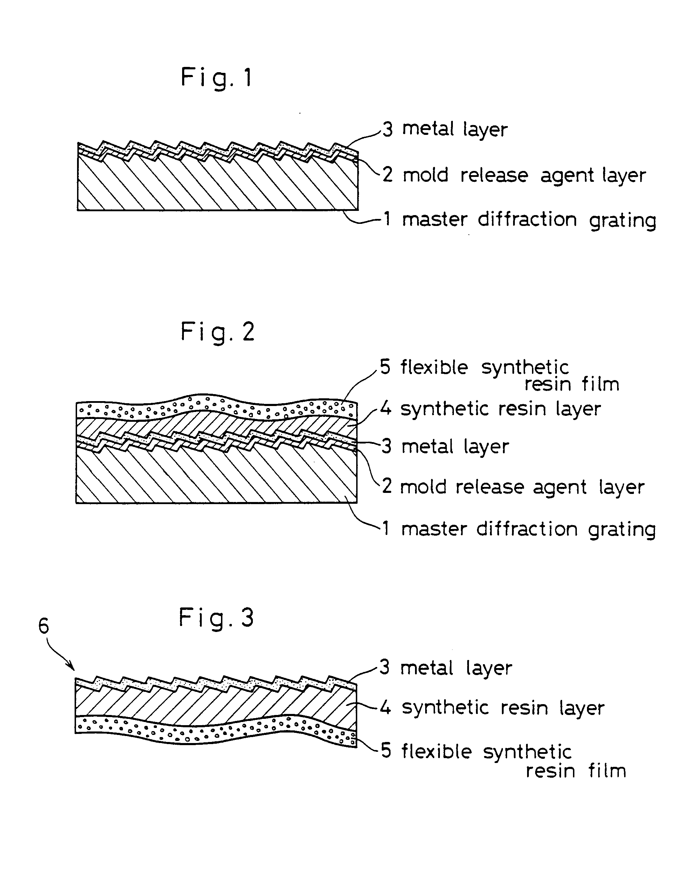

FIGs 1 through 3 show manufacturing steps of the flexible replica grating.

As shown in FIG. 1, a master diffraction grating 1 is first prepared.

The master diffraction grating is used to prepare a replica. A mold release agent layer 2 is deposited on the surface of the master diffraction grating 1 . A metal layer 3, for example, an aluminum layer is deposited on the mold release agent layer 2. The metal layer 3 is made to be of wave-like shape. As a metal layer 3, a gold layer is also preferred.

As shown in FIG. 2. a synthetic resin layer 4, for example, an epoxy layer which is fully defoamed is coated on the metal layer 3. On the resin layer 4 as a filler layer, a flexible synthetic resin film 5, for example, a polyimide film is layered. By pressing on the layers 4 and 5 slightly, air is evacuated from the interface between the layers 4 and 5. Any type of polyimide film can be applied for the film 5.

For example, a polyimide film available from Nitto Denko Co. Ltd. Japan under the trade name of "Nitto-Mid U-Film U" is used. The synthetic resin layer 4 is hardened, preferably, at about 60°C for about 8 hours.

After the resin layer 4 is hardened, a combination of the metal layer 3, the resin layer 4, and the resin film 5 is released from the master diffraction grating 1. By removing the release agent layer 2 from the surface of the metal layer 3, a replica diffraction grating 6 is completed as shown in FIG 3. Preferably, the thickness of the metal layer 3 is about 0.1 µm; the resin layer 4 about 10-20 µm; and the resin film 5 about 125 µm.

Since the above replica grating 6 comprises the resin film 5, for example, composed of polyimide, high flexibility can be attained.

It can be easily cut. Such flexibility enables the construction of a multiplexer/demultiplexer.

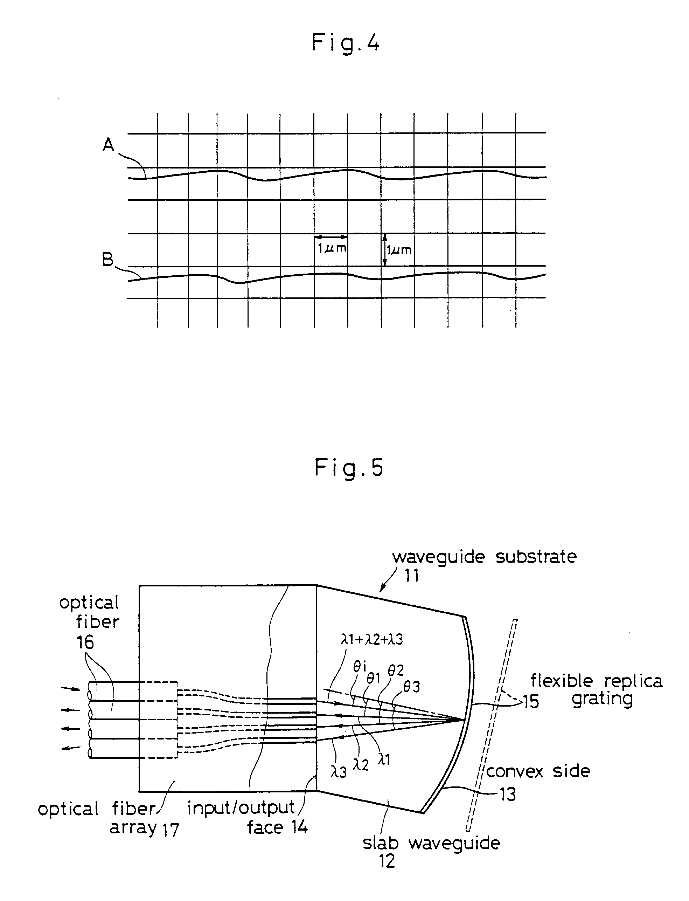

FIG. 4 shows a graph representing the comparison of groove shapes between the surface of the master diffraction grating 1 and that of the replica grating 6. Data "A" of FIG. 4 represents the groove shapes on the surface of the master diffraction grating 1 while data "B" of FIG. 4 represents those on the surface of the replica grating 6. This indicates that no substantial difference appears due to the using of the polyimide film.

According to a preferred embodiment of the present invention, a flexible synthetic resin film is used to provide a replica grating which is very flexible with simple manufacturing steps.

Attention is now directed to an optical multiplexer/demultiplexer comprising the above-described flexible replica grating, a waveguide, and a fiber array. FIG. 5 shows an optical multiplexer/demultiplexer.

A multimode slab waveguide 12 is provided on a waveguide substrate 11. The end of the multimode slab waveguide 12 forms a convex side 13.

The other end of the multimode slab waveguide 12 functions as an input/output face 14 to the multimode slab waveguide 12. At the convex side 13, a flexible replica grating 15 is attached to and bent along the shape of the convex side 13. The ends of optical fibers 16 alligned within an optical fiber array 17 are coupled to the input/output face 14. Although it is preferred that the input/output face 14 of the multimode slab waveguide 12 is a curved surface, it is so difficult to connect the ends of the optical fibers to such a curved surface that the face 14 is approximated to be a flat plane.

As the optical demultiplexer of FIG. 5, in operation, the light having wavelengths of λ1, λ2, and λ3 is transmitted within one of the optical fibers 16 and incident upon the multimode slab waveguide 12 at an angle of ϑi with the optical axis via the input/output face 14.

The incident light passing through the multimode slab waveguide 12 is diffracted by the flexible replica grating 15 positioned at the convex side 13. The light having wavelenghs of λ1, λ2 and λ3 is diffracted in the direction of angles ϑ1, ϑ2, and ϑ3, respectively. Therefore, the diffracted light is focused on different positions on the input/output face 14. Each of the optical fibers 16 is positioned at the forcused positions so that an individual fiber 16 can transmit the specific light among the wavelenghs of λ1, λ2, and λ3.

As the multiplexer of FIG. 5, in operation, the light having the wavelenghs of λ1, λ2, and λ3 is transmitted in the opposite direction as stated above. The light is diffracted by the flexible replica grating 15 so that it is focused at a point of an angle of ϑi with the optical axis on the input/output face 14. A single fiber 16 can transmit the mixed light of the wavelenghs λ1, λ2, and λ3.

By way of example, according to a second example of application of the present invention, a demultiplexer has three channels, and the center wavelehgths of the channels are 1200, 1310, and 1550 nm, respectively.

The pass band width (full width at half maximum) of each channel is about 40 nm. With these features, adaptability between laser diodes and the demultiplexer is improved.

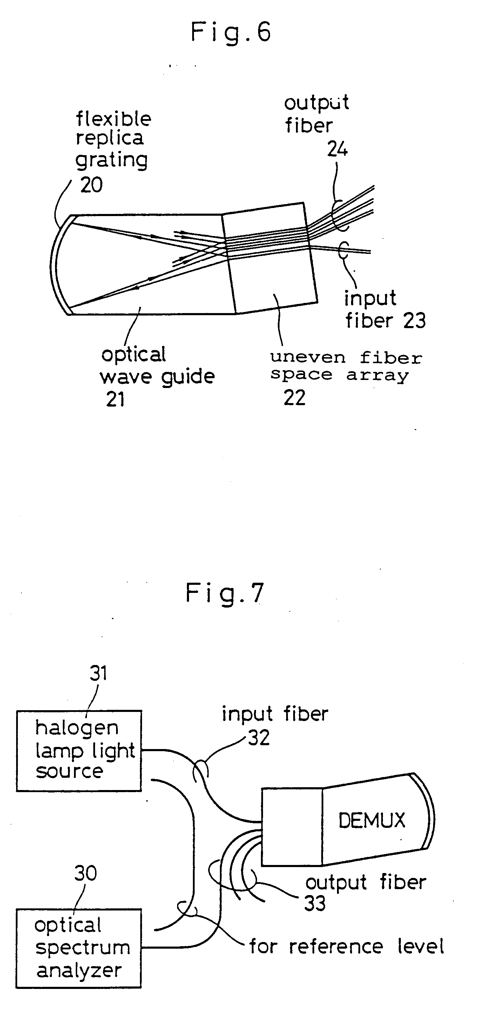

The device fabricated in this example of application is shown schematically in FIG. 6. This device is composed of a flexible replica grating 20, an embedded optical waveguide 21, and an uneven fiber space array 22. The pass band width depends upon the design of the three parts.

The grating design and waveguide configuration are more or less optional; on the other hand, the fibers used in the demultiplexer are restricted. In this example of application, the input fiber 23 has a graded index (GI) 50 µm diameter core, 125 µm outer dia. with a numerical aperture (N.A.) of 0.2. The output fiber 24 has a GI 80 µm core, 125 µm o.d.with a N.A. of 0.24.

The diffraction grating is designed to produce a wide pass band width of each channel and to eliminate polarization.

Polarization of a diffraction grating is avoided by using very low blaze angle grating. The blaze angle of the grating used in the demultiplexer is about 1.5° , which is sufficientlly low to show no polarization. The said flexible replica was easily bent along the convex end facet of the waveguide; therefore, a concave grating was easily formed by bonding the replica on the convex face.

The optical waveguide was fabricated by an ion-exchange process.

To make a low propagation loss of the waveguide, an embedded structure was used. The fabrication process of the waveguide is as follows. 1st step: Thermal ion-exchange, which forms a high thallium concentration layer on the surface of a substrate glass. 2nd step: Thermal diffusion, which smoothes the thallium profile. 3rd step: Electric field assisted ion migration, which embeds the waveguide. The guiding layer of the waveguide was about 70µm thick, and the center of refractive index change was about 40 µm beneath the surface. The propagation loss of the waveguide will be discussed later. After the steps mentioned above, the glass substrate was formed into the shape shown in FIG 6. The convex end and the tilted facet were polished.

To arrange the optical fibers at appropriate positions, a photo-sensitive glass was used. Each optical fiber was placed in a square shape groove on the photo-sensitive glass. The groove width and its depth were both 126 µm, and the spaces between the grooves were 125 µm for input-1200 nm channel, 12.5 µm for 1200-1310 nm channel, and 175 µm for 1310-1550 nm channel. The grooved photo-sensitive glass and the optical fibers were cemented together to form the uneven fiber space array.

The demultiplexer was assembled with the flexible replica grating, the optical waveguide, and the fiber array. At this time, the relative position between the waveguide and the array was adjusted so as to make the center wavelength of each channel to meet the designed one.

Branching characteristics of the demultiplexer is measured with an optical spectrum analyzer 30 and a halogen lamp light source 31 as shown in FIG 7. The optical power spectrum of the light source was measured as a reference level with a GI 50 µm core dia. optical fiber.

The insertion loss of the demultiplexer without the diffraction efficiency of the replica grating was measured with the reflection light from the convex end surface of the waveguide. In this example of application, the light from the input fiber 32 propagated along the waveguide, about 30 mm long, and was reflected by the convex end face.

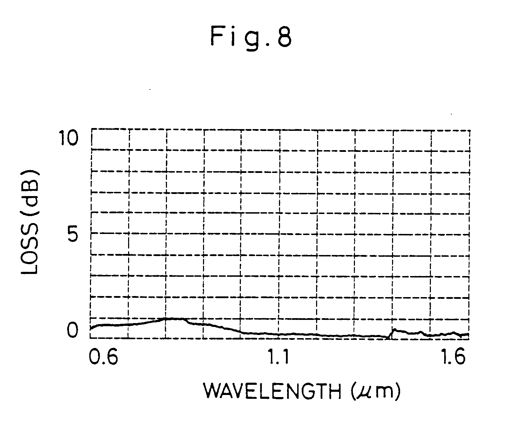

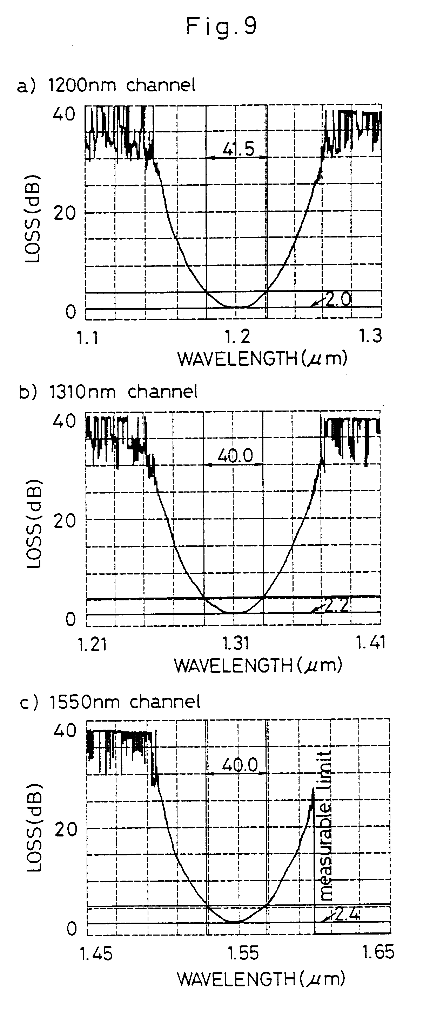

The reflected light propagated again along the waveguide into the output fiber 33. For this purpose, the convex end was evaporated with aluminum. FIG. 8 shows the measurement result. The loss in the desired wavelength range is sufficiently low, below 0.5 dB. This low propagation loss suggests that the embedded waveguide was very uniform. FIG. 9 shows the branching characteristics of the demultiplexer. As shown in FIG. 9, the minimum insertion losses of the three channles ranges from 2.0 to 2.4 dB, and the pass band width values from 40 to 41.5 nm.

The center wavelength of each channel was adjusted within ±10 nm without any difficulty; however, a modicum offset between the experimental wavelength and the designed value was unavoidable due to the shaping process tolerance of the waveguide. In this case shown in FIG. 9. 1550 nm channel was shifted by 1.5 nm toward shorter wavelength, and 1200 nm channel by 0.75 nm toward longer wavelength.

The diffraction efficiency of the replica grating was estimated from the minimum insertion losses and the propagation loss mentioned above.

The estimated efficiency, aroud 65%, showed good agreement with that of the master grating which gas produced on trial. From these results, it can be said that the flexible replica grating was a very good duplication of the master grating and bending the replica to produce a concave grating had little influence on the dispersion characteristics of the replica.

A flexible replica grating, an embedded optical waveguide, and an uneven fiber space array have been assembled into a one body to form a three channel demultiplexer. The flexible replica grating was used to realize a concave grating, and it performed well as a demultiplexer. The uneven fiber space array enabled the input light to be demultiplexed into the three specific wavelength channels.

The uneven fiber space array was used to arrange the center wavelength of each channel to be 1200, 1310 and 1550 nm, respectively.

The minimum insertion losses of the channels ranged from 2.0 to 2.4 dB, and the difference between the experimented value of the center wavelength and the designed one was very small within 2 nm.

## Claims

1. A method of manufacturing a flexible replica grating (6), comprising the steps of:
preparing a mold release agent layer (2) on the surface of a master diffraction grating (1);
preparing a metal layer (3) on said mold release agent layer (2);
preparing a synthetic resin layer (4) on said metal layer (3);
preparing a flexible synthetic resin film (5) on said synthetic resin layer (4);
hardening said synthetic resin layer (4);
and removing the combination of said metal layer (3), said synthetic resin layer (4), and said flexible synthetic resin film (5) from said master diffraction grating (1) to thereby obtain a flexible replica grating.

## Patentansprüche

1. Verfahren zum Herstellen eines flexiblen Replika-Gitters (6) mit folgenden Verfahrensschritten:
Aufbringen einer Ablösemittelschicht (2)für eine Form auf die Oberfläche eines Master-Defraktionsgitters (1);
Aufbringen einer Metallschicht (3) auf die Ablösemittelschicht (2) für die Form;
Aufbringen einer synthetischen Kunstharzschicht (4) auf die Metallschicht (3);
Aufbringen eines flexiblen synthetischen Kunstharzfilms (5) auf die synthetische Kunstharzschicht (4);
Aushärten der synthetischen Kunstharzschicht (4); und
Entfernen der Kombination der Metallschicht (3), der synthetischen Kunstharzschicht (4) und des flexiblen synthetischen Kunstharzfilms (5) von dem Master-Defraktionsgitter (1), um ein flexibles Replika-Gitter zu erhalten.

## Revendications

1. Procédé de fabrication d'un réseau réplique flexible (6) comprenant les étapes consistant à :
préparer une couche (2) d'agent de démoulage sur la surface d'un réseau de diffraction modèle (1);
préparer une couche métallique (3) sur ladite couche d'agent de démoulage (2) ;
préparer une couche de résine synthétique (4) sur ladite couche métallique (3);
préparer une pellicule flexible de résine synthétique (5) sur ladite couche de résine synthétique (4);
durcir ladite couche de résine synthétique (4);
et retirer la combinaison de ladite couche métallique (3) de ladite couche de résine synthétique (4) et de ladite pellicule flexible de résine synthétique (5) dudit réseau de diffraction modèle (1) pour obtenir ainsi un réseau réplique flexible.
